# EUROPÄISCHE PATENTANMELDUNG

(11) **EP 0 982 204 A1**
(43) Veröffentlichungstag der Anmeldung: **01.03.2000**
(21) Anmeldenummer: 99116247.0
(22) Anmeldetag: 18.08.1999
(51) Int. Cl.: B60R 25/10, B60Q 1/10

(54) **Diebstahlwarnanlage für Kraftfahrzeuge**

(30) Priorität: 22.08.1998 DE 19838233
(71) Anmelder: ADAM OPEL AG, 65423 Rüsselsheim (DE)
(72) Erfinder: Diehl, Peter G., Dipl.-Ing., 64521 Gross-Gerau (DE)
(74) Vertreter: Bergerin, Ralf, Dipl.-Ing.

(57) **Zusammenfassung**

Die Erfindung bezieht sich auf eine Diebstahlwarnanlage für Kraftfahrzeuge mit zumindest einem am Fahrzeug angeordneten Neigungssensor, dessen Signale bei in Betrieb befindlicher Diebstahlwarnanlage von einer Steuereinheit ausgewertet werden, derart, daß bei signifikanten Änderungen der Fahrzeugneigung Alarm ausgelöst wird, wobei der Neigungssensor eine fest mit einem Fahrzeugscheinwerfer verbundene "Wasserwaage" ist, die des weiteren Funktionen bei der Scheinwerfereinstellung erfüllt.

## Beschreibung

Die Erfindung bezieht sich auf eine Diebstahlwarnanlage für Kraftfahrzeuge mit den im Oberbegriff des Patentanspruchs 1 angegebenen Merkmalen. Bei derartigen Anlagen wird nach der Inbetriebnahme die Fahrzeugneigung überwacht, wozu fahrzeugfest zumindest ein Neigungssensor vorgesehen ist. Verändert sich die Neigung signifikant, wenn das Fahrzeug beispielsweise aufgebockt oder mittels eines Spezialfahrzeuges abgeschleppt wird, wird ein Alarm ausgelöst.

Vorrichtungen dieser Art sind beispielsweise aus der DE 29 28 328 A1, DE 29 42 252 A1 (Tauchsensoren), DE 33 18 275 A1, DE 86 23 044 U1 (Pendelsensor), DE 41 41 324 A1 (kapazitiver Neigungssensor) oder aus der DE 42 11 507 C1 (Widerstandssensor) bekannt. Der jeweils notwendige Sensor verursacht einen Aufwand, der bei der Fahrzeuerstellung unerwünscht ist. Es wäre möglich, bei Fahrzeugen, die eine Niveauregulierungsvorrichtung aufweisen, dort ermittelte Sensorwerte auch beim Diebstahlschutz zu verwenden. Bei Fahrzeugen, die nicht mit dieser optionalen Ausstattung versehen sind, muß jedoch weiterhin ein separater Neigungssensor für die Diebstahlwarnung vorgesehen werden.

Es ist Aufgabe der Erfindung, den Aufwand zur Schaffung von Diebstahlwarnanlagen der oben genannten Art ohne Funktionseinbußen zu verringern.

Zur Lösung dieser Aufgabe zeichnet sich die erfindungsgemäße Diebstahlwarnanlage durch die im Patentanspruch 1 angegebene Merkmale aus. Weitere Einzelheiten der Erfindung ergeben sich aus den Patentansprüchen 2 und 3.

Die Erfindung geht davon aus, daß zukünftig immer mehr Fahrzeuge mit Vorrichtungen zur automatischen Scheinwerfereinstellung ausgestattet werden. Im Fahrzeugbetrieb gewährleisten diese Vorrichtungen eine optimale Fahrbahnausleuchtung. Zur Realisierung dieser Funktion muß die Scheinwerferneigung erkannt werden. Zusätzlich ist es in einigen Ländern bereits vorgeschrieben, daß die Scheinwerferneigung von außen (durch die Polizei) erkennbar ist, wozu an den Scheinwerfern Wasserwaagen angeordnet sind (Beispiel: DE 39 40 282 A1).

Es wird vorgeschlagen, die "Wasserwaage" mechanisch/ elektronisch auszuführen und neben ihrer Funktion bei der Scheinwerfereinstellung auch als Neigungssensor für die Diebstahlwarnanlage zu nutzen. Die "Wasserwaage" ist einerseits weiterhin visuell ablesbar, und elektronische Datensignale, die in Abhängigkeit von der Scheinwerferposition erzeugt werden, werden andererseits im Fahrzeugbetrieb für automatische Scheinwerfer-Einstellvorgänge und bei stillstehendem Fahrzeug und aktiver Diebstahlwarnanlage für die Diebstahlerkennung genutzt. Die Vorrichtungen zur automatischen Scheinwerfereinstellung arbeiten nur im Fahrbetrieb. Bei Stillstand des Fahrzeuges und abgestelltem Motor erfolgen keine Scheinwerferverstellungen. Darum können in dieser Situation die die Scheinwerferstellung dokumentierenden Signale der "Wasserwaage" auch als die Fahrzeugneigung angebende Signale betrachtet werden. Es ist zwar kein absoluter Meßwert der Fahrzeugneigung allein aus dem Signal der "Wasserwaage" reproduzierbar, aber die Änderung der Fahrzeugneigung ist aus diesem Signal bei abgestelltem Fahrzeug sehr wohl erkennbar. Diese Erkenntnis führt dazu, der "Wasserwaage" der Scheinwerfer eine Eignung als Sensor für die Diebstahlwarnanlage zuerkennen zu können, obwohl dieser Sensor nicht fahrzeugfest, sondern am beweglichen Scheinwerfer befestigt ist. Diebstahlwarnanlagen werden durch einen manuellen Schaltvorgang nur bei stillstehendem Fahrzeug in Betrieb gesetzt und nur dann werden die Signale der "Wasserwaage" in einer Steuereinheit der Diebstahlwarnanlage ausgewertet. Plötzliche Neigungsveränderungen der Scheinwerfer sind dann gleichzeitig als Neigungsveränderungen des Fahrzeugs zu bewerten und führen zur Alarmauslösung.

Zur Realisierung der Erfindung wird die Position einer Luftblase oder eines Schwimmers der "Wasserwaage", die visuell ablesbar ist, auch elektronisch erfaßt, und entsprechende Sensorsignale werden der Steuereinheit der Diebstahlwarnanlage zugeführt. Diese Signale sind zur Scheinwerferstellung und bei Fahrzeugstillstand auch zur Fahrzeugneigung proportional. Die Steuereinheit verwendet einen Sensorwert als Ausgangswert, der dann abgespeichert wird, wenn sich das Fahrzeug im Stillstand befindet und die Diebstahlwarnanlage eingeschaltet wird. Hier ist also zusätzlich noch ein den Fahrzeugstillstand dokumentierendes Signal (vom Zündschloß oder vom Motor) auszuwerten. Änderungen dieses Ausgangswertes werden fortan in der Steuereinheit ausgewertet und können zur Alarmauslösung führen. Nur bei sehr langsamen Neigungsänderungen (wenn das Fahrzeug beispielsweise sehr langsam im Schnee einsinkt) erfolgt kein Alarm.

Hauptvorteil der Erfindung ist, daß ein zunehmend oft bereits im Fahrzeug vorhandener Sensor zur Erfassung der Scheinwerferneigung, der bislang nicht als die Fahrzeugneigung repräsentierender Sensor in Betracht gezogen wurde, auch als Sensor für die Diebstahlwarnanlage genutzt wird. So kann ein zusätzlicher, kostenaufwendiger, fahrzeugfester Sensor eingespart werden.

## Patentansprüche

1. Diebstahlwarnanlage für Kraftfahrzeuge mit zumindest einem am Fahrzeug angeordneten Neigungssensor, dessen Signale bei in Betrieb befindlicher Diebstahlwarnanlage von einer Steuereinheit ausgewertet werden, derart, daß bei signifikanter Änderung der Fahrzeugneigung Alarm ausgelöst wird, **dadurch gekennzeichnet**, daß der Neigungssensor eine fest mit einem Fahrzeugscheinwerfer verbundene "Wasserwaage" ist, die des weiteren Funktionen bei der Scheinwerfereinstellung erfüllt.

2. Diebstahlwarnanlage nach Anspruch 1, **dadurch gekennzeichnet**, daß die "Wasserwaage" eine mechanischelektronische "Wasserwaage" ist, an der die Scheinwerfereinstellung einerseits visuell ablesbar ist und die andererseits zur Scheinwerferstellung proportionale Datensignale generiert, welche an die Steuereinheit übertragen werden.

3. Diebstahlwarnanlage nach Anspruch 1 oder 2, **dadurch gekennzeichnet**, daß ihre Inbetriebnahme nur bei still stehendem Fahrzeug möglich ist, wenn keine Verstellvorgänge an den Scheinwerfern zu erwarten sind.
